# EUROPEAN PATENT APPLICATION

(11) **EP 4 759 180 A1**
(43) Date of publication of application: **17.06.2026**
(21) Application number: 25222892.9
(22) Date of filing: 12.12.2025
(51) Int. Cl.: A43B 23/02, B32B 5/24

(54) **SHOE UPPER WITH A LAYERED STRUCTURE FOR A SPORTS SHOE**

(30) Priority: 12.12.2024 DE 102024137464
(71) Applicant: adidas AG, 91074 Herzogenaurach (DE)
(72) Inventor: FERRARI, Quentin, 91074 Herzogenaurach (DE); CURET, Raphael, 91074 Herzogenaurach (DE); SLACK, James, 91074 Herzogenaurach (DE); GORDON, Andrew, 91074 Herzogenaurach (DE); PENG, Yanfen, Guangzhou (CN)
(74) Representative: Bardehle Pagenberg Partnerschaft mbB Patentanwälte Rechtsanwälte

(57) **Abstract**

The present invention relates to a shoe upper, in particular for a sports shoe, comprising a layered structure having a first layer, a second layer, and an intermediate foam layer between the first layer and the second layer, wherein the intermediate foam layer comprises a polyamide, PA, foam material. The present invention also relates to a sports shoe comprising such a shoe upper.

## Description

### 1. Technical field

The present invention relates to a shoe upper, in particular for a sports shoe, comprising a layered structure having a first layer, a second layer, and an intermediate foam layer between the first layer and the second layer, wherein the intermediate foam layer comprises a polyamide, PA, foam material.

The present invention also relates to a sports shoe comprising such a shoe upper.

### 2. Prior art

A shoe is commonly described as the combination of a shoe upper and a sole. Typically, the shoe upper covers regions such as the instep, the toe, the medial side, the lateral side, and the heel of a wearer's foot and provides an opening to allow the wearer to step inside the footwear. The shoe upper typically performs several different functions, such as protection, support and comfort. The sole is connected to the upper such that the sole's top side faces an underfoot portion of the upper, and its bottom side touches the ground during ordinary use of the shoe.

Foam materials have become a crucial component in the design and manufacturing of modern footwear, especially in the soles for athletic and sports shoes. The development and use of foam in shoes are rooted in the need for enhanced comfort, cushioning, support, and performance. Over time, the technology and materials used in foam production have advanced significantly. Manufacturers have developed various types of foam, each with unique properties tailored to specific performance needs. For example, memory foam offers a custom fit by molding to the shape of the foot, while polyurethane (PU) foam provides more durability and energy return.

EP 3,253,247 A1 discloses an article of footwear with a multi-layer upper, where the outermost layers of the upper are cut into a pattern. The cut portions of the upper are mounted on a contiguous substrate layer so that the edges of the cut portions are visible and perceptible to touch. The upper remains durable in terms of abrasion resistance, ply adhesion, tensile strength, and flex testing.

EP 3,765,640 A1 discloses a method for producing a layered material, which has a substrate layer, and a layer of polyurethane bonded to the substrate layer, wherein a leather, preferably a sanded grain leather, a textile material, preferably a woven fabric or a knitted fabric, a bonded leather material or a microfiber nonwoven is used as the substrate layer and is bonded to the layer.

US 10,499,706 B2 discloses a method for manufacturing an upper for an article of footwear including the steps of forming a foam layer, forming a preliminary upper by laminating an outer layer, an inner layer, and the foam layer intermediate to the outer layer and the inner layer; and molding the preliminary upper to a shape having a contour to substantially fit at least a portion of a foot to provide at least a portion of an upper for an article of footwear.

US 2006/051566 A1 relates to a comfort element for an article of footwear or an article of clothing, a method of manufacturing same, and an article of footwear or clothing that includes such element. The comfort element is manufactured by superimposing a first layer of material having a melting temperature theta1, a layer of foam material having a melting temperature theta2, a second layer of material having a melting temperature theta3, the temperature theta2 being lower than theta1 and theta3, and assembling by welding the three layers to one another along predetermined welding lines, whereby the layer of foam material is brought to a temperature theta4 comprised between theta2 and theta1, theta3 along the welding lines. At least one film of heat-meltable glue, precut along the predetermined welding lines and having a melting temperature theta5 on the order of theta2, is inserted between one of the material layers and the foam material layer.

Further prior art is disclosed in JP H02 - 99 603 A and DE 92 14 714 U1.

While the above documents claimed improvement over the known prior art thus far, the proposed solutions of said documents still have some deficiencies when it comes to providing the above noted requirements to a shoe upper. One common disadvantage of the known shoe upper is that some foam materials are perceived to be relatively stiff and not as flexible as desired for high quality football shoes.

Against this background, it is an object of the present invention to provide an improved shoe upper.

### 3. Summary of the invention

The above-mentioned objects are at least partially achieved by the subject matter of the independent claims. Preferred embodiments are subject of the dependent claims, and other suitable aspects of the present invention are described through the overall disclosure of the present application. It is noted that possible headlines in the present disclosure are provided solely for the purpose to assist in keeping an overview during reading. The headlines do not mean that features of the respective embodiments cannot be combined.

In one aspect, the objects of the present disclosure are at least partially solved by a shoe upper, in particular for a sports shoe, comprising a layered structure having (a.) a first layer, (b.) a second layer, and (c.) an intermediate foam layer between the first layer and the second layer, wherein the intermediate foam layer comprises a polyamide, PA, foam material.

In this manner, several properties like flexibility and cushioning are improved. For example, PA foam is known for its high tensile strength and abrasion resistance, which significantly enhances the overall durability of the footwear. The foam layer helps protect the layers from wear and tear, extending the lifespan of the shoe.

Further, the PA foam layer provides additional structural support to the shoe upper, maintaining its shape and form over time. This is particularly important in preventing deformation or sagging of the upper during extended use.

Moreover, PA foam offers excellent cushioning properties, contributing to the comfort of the wearer by absorbing shocks and impacts during movement. This makes the shoe more comfortable for prolonged wear, reducing foot fatigue.

Further, despite its strength, PA foam is lightweight, which helps reduce the overall weight of the shoe. This contributes to improved performance, particularly in athletic footwear, by minimizing the energy required for movement.

Further, the PA foam layer can be tailored in terms of density and thickness to achieve specific performance characteristics, such as flexibility or rigidity in certain areas of the shoe. This allows for a more customized fit and feel. Unlike other foam materials that may compress or lose their resilience over time, PA foam retains its properties longer, ensuring consistent performance throughout the life of the shoe.

In addition, the PA foam layer can also provide thermal insulation, helping to maintain a comfortable temperature inside the shoe. This is beneficial in various weather conditions, keeping the foot warm in cold environments and cool in hot environments.

Moreover, PA foam can be engineered to have moisture-wicking properties, assisting in managing perspiration and keeping the foot dry. This contributes to better hygiene and comfort.

In some embodiments, the PA foam layer may comprise perforations, preferably micro-perforations, to further improve the moisture-wicking properties and thereby assist in managing perspiration and keeping the foot dry.

In summary, incorporating an intermediate foam layer with a PA foam material between the first layer and the second layer in a shoe upper provides a balanced combination of durability, comfort, lightweight construction, and thermal regulation, making it a superior choice for high-performance footwear.

In a preferred embodiment of the shoe upper as described herein, at least one of the following applies: the first layer is adapted to be turned inward of the shoe upper, the second layer is adapted to be turned outward of the shoe upper, or the intermediate layer is adapted to provide stretchability and cushioning for ball contacts.

This multi-layered shoe upper design offers a blend of comfort, durability, flexibility, and performance, making it ideal for athletic footwear where both protection and functionality are paramount. For example, the first layer, being turned inward, directly contacts the foot, providing a soft and comfortable interior surface. This design reduces friction against the skin, minimizing the risk of blisters and irritation, enhancing overall comfort during wear. Further, the second layer, turned outward, faces the external environment, offering a robust and durable exterior. This layer protects the shoe upper from abrasions, scuffs, and environmental factors, such as dirt and moisture, ensuring the shoe maintains its appearance and longevity. Moreover, the intermediate layer, designed to provide stretchability and cushioning, enhances the shoe's performance during ball contacts. The stretchable nature of the foam allows for better adaptability and flexibility during dynamic movements, while the cushioning absorbs impacts, improving control and comfort when the foot contacts the ball. This is particularly advantageous for sports like soccer, where precise ball control is crucial. Further, the stretchability of the intermediate layer allows the shoe to conform to the natural movements of the foot, providing a snug yet flexible fit. This feature is essential for athletic footwear, where freedom of movement and foot flexibility are critical for optimal performance. Moreover, the cushioning provided by the intermediate layer offers superior shock absorption, protecting the foot from impacts during activities like running or jumping. This reduces the risk of injury and enhances the comfort and safety of the wearer. The layered structure, with a cushioned intermediate layer, can also contribute to thermal insulation, keeping the foot warm in cooler conditions. Additionally, if the layers are designed with breathable materials, the shoe can manage moisture effectively, keeping the foot dry and comfortable. Further, the different layers allow for customization in terms of materials and properties. For example, the outward textile layer could be made from a durable, water-resistant material, while the inward layer could be a soft, moisture-wicking fabric. This flexibility in design makes the shoe adaptable to various conditions and user preferences.

In a preferred embodiment of the shoe upper as described herein, the first layer forms an innermost surface of the shoe upper. Placing the first layer as the innermost surface of the shoe upper provides a soft and smooth interface directly against the foot. This reduces the likelihood of irritation, chafing, or discomfort, particularly during extended wear. Further, the first layer can be designed with moisture-wicking properties, helping to draw sweat away from the skin and into the outer layers of the shoe. This keeps the foot dry, improving comfort and reducing the risk of blisters. Breathable material as the innermost layer promotes air circulation around the foot, helping to regulate temperature and prevent overheating. This contributes to overall foot health and comfort, particularly in warm conditions. Moreover, as the innermost layer, this layer can provide a protective barrier between the foot and other structural components of the shoe, such as stiffeners or reinforcement materials, ensuring that the foot is cushioned and shielded from any potentially harsh or rigid elements.

In a preferred embodiment of the shoe upper as described herein, the second layer forms an outermost surface of the shoe upper. The second layer, being the outermost surface, serves as the first line of defense against environmental elements such as abrasion, dirt, and moisture, protecting the inner layers and extending the lifespan of the shoe. Further, the outermost layer can be designed with various textures, colors, and patterns, allowing for greater design flexibility and customization. This enhances the visual appeal of the shoe, making it more attractive to consumers. Moreover, if the second layer is treated with water-repellent or stain-resistant coatings, it helps keep the shoe clean and dry in wet or dirty conditions, improving the overall usability of the footwear. Further, depending on the material chosen for the second layer, it can contribute to the breathability of the shoe, allowing air to circulate and keeping the foot cool and comfortable.

In a preferred embodiment of the shoe upper as described herein, the layered structure is arranged in a vamp region of the shoe upper. The vamp region, which covers the top of the foot and includes the area over the toes, experiences significant pressure and movement. A layered structure with cushioning, such as foam, provides additional comfort by distributing pressure more evenly across the foot. Also, the vamp region needs to accommodate various foot shapes and sizes. A layered structure allows the material to better conform to the contours of the foot, offering a snug and secure fit that adapts to individual foot shapes. The vamp region is subject to frequent bending and flexing. A reinforced layered structure enhances the durability of the upper, preventing premature wear and tear in this critical area. By incorporating materials that manage moisture effectively, the layered structure can improve breathability in the vamp region. This is crucial for maintaining foot comfort and reducing the risk of blisters or odors caused by trapped moisture. Moreover, the vamp region plays a key role in controlling foot movement during walking or running. A well-designed layered structure can provide the necessary support to maintain stability, preventing excessive movement that could lead to discomfort or injury.

In a preferred embodiment of the shoe upper as described herein, the layered structure is arranged in a forefoot region of the shoe upper. The forefoot is subjected to significant pressure and impact during walking, running, and other activities. The layered structure provides additional cushioning and shock absorption in this critical area, protecting the foot from injury and discomfort. By incorporating a layered structure with cushioning properties in the forefoot, the shoe can provide better energy return with each step. This can improve the efficiency of movement, making the shoe more responsive and enhancing performance, especially in sports footwear.

In a preferred embodiment of the shoe upper as described herein, the layered structure is arranged in a toe region of the shoe upper. The layered structure in the toe region provides additional cushioning and protection against impacts, reducing the risk of injuries from stubbing or external forces. Further, the toe region is subject to significant wear and tear, especially in activities like running or hiking. The layered structure reinforces this area, increasing the durability of the shoe and preventing premature wear.

In a preferred embodiment of the shoe upper as described herein, the first layer is a first textile layer. By incorporating a textile layer, manufacturers can produce a shoe upper that balances breathability, comfort, and durability, while maintaining flexibility in both function and design. For example, a textile layer can enhance breathability, which allows air to circulate through the shoe, keeping the foot cool and dry. Further, a textile layer allows for greater flexibility and adaptability to the foot's movements. This flexibility can result in a more natural fit and better comfort, particularly in areas that experience a lot of flexion, such as the forefoot and midfoot.

In a preferred embodiment of the shoe upper as described herein, the first layer comprises a coating, a film, a synthetic leather or a leather. This combination of materials allows shoe designers to optimize the shoe for specific performance requirements, such as making the shoe more suitable for athletic, casual, or outdoor uses. For example, coatings, films, and synthetic or natural leather offer improved wear resistance, protecting the shoe from environmental factors like water, dirt, or abrasion. These materials can extend the lifespan of the shoe, especially in high-stress areas like the toe or sides of the upper. Further, coatings and films can be engineered to provide water resistance, preventing moisture from seeping into the shoe. This is crucial for outdoor or athletic shoes where water exposure is common. Leather and synthetic leather naturally offer some level of water resistance as well. Moreover, the use of films and coatings can add lightweight structural support without the need for heavier materials. This helps maintain the form and fit of the shoe, while still allowing flexibility and movement in specific areas.

In a preferred embodiment of the shoe upper as described herein, the second layer is a second textile layer. The previous mentioned advantages for the first textile layer also apply to the second textile layer.

In a preferred embodiment of the shoe upper as described herein, the second layer comprises a coating, a film, a synthetic leather or a leather. The previous mentioned advantages for the first layer also apply to the second layer.

In a preferred embodiment of the shoe upper as described herein, one or more of the first layer and the second layer comprises a fabric, preferably a knitted fabric. Knitted fabrics offer a high degree of flexibility and stretchability compared to woven fabrics. This flexibility allows the shoe upper to conform more comfortably to the foot's shape, providing a better fit and improved comfort. The open structure of knitted fabrics enhances airflow and ventilation within the shoe. This breathability helps in maintaining a cooler and more comfortable environment for the foot, reducing moisture buildup and increasing overall foot comfort. The softness and elasticity of knitted fabrics contribute to a more comfortable wearing experience. The fabric's ability to stretch and adapt to the foot's movements can reduce pressure points and friction, leading to less foot fatigue and discomfort.

In some embodiments, the knitted fabric may be weft-knitted or warp-knitted.

In some embodiments, one or more of the first textile layer and the second textile layer may also comprise a woven and/or a non-woven textile. Woven fabrics are known for their durability and resistance to wear and tear. The interlacing of fibers in a woven fabric provides greater strength compared to non-woven fabrics, which helps the layers resist abrasion and extend the lifespan of the shoe. The use of woven fabrics in critical areas can provide additional reinforcement and support, enhancing the overall performance and longevity of the shoe. Non-woven fabrics are often designed to be more breathable compared to traditional woven fabrics. This improves air circulation within the shoe, helping to regulate temperature and reduce moisture buildup, which enhances overall foot comfort. Further, non-woven fabrics can be lighter than woven alternatives due to their unique manufacturing process. This helps in reducing the overall weight of the shoe, contributing to improved performance and comfort for the wearer.

In a preferred embodiment of the shoe upper as described herein, one or more of the first layer and the second layer comprise a PA material. This delivers benefits such as enhanced durability, strength, moisture management, thermal regulation, and comfort, making it an advantageous choice for creating high-quality and high-performance footwear. For example, using PA in the textile layers enhances the overall durability of the shoe upper, making it more resistant to wear and tear, which extends the life of the footwear. Further, PA fabrics have good moisture-wicking properties, which help in managing sweat and keeping the foot dry. This moisture management contributes to better comfort and hygiene, reducing the likelihood of foot odor and fungal infections. In this way, PA textiles are flexible and can be engineered to provide a comfortable fit. The material's ability to stretch and conform to the shape of the foot enhances the shoe's overall comfort, reducing pressure points and improving wearability. Moreover, having the same material class as the intermediate PA foam layer enhances the manufacturing of the layered structure.

Moreover, one or more of the first layer and the second layer may also comprise a polyurethane, PU, material and/or a thermoplastic polyurethane, TPU, material.

In a preferred embodiment of the shoe upper as described herein, one or more of the first textile layer and the second textile layer comprises a thickness between 0.05 mm and 1.0 mm, preferably a thickness between 0.1 mm and 0.8 mm, more preferably a thickness between 0.2 mm and 0.6 mm, most preferably a thickness of approximately 0.3 mm. Textile layers in this thickness range contribute to effective breathability, which helps in moisture management and temperature regulation. This thickness is sufficient to allow air circulation while still providing adequate coverage and protection. A textile layer thickness within this range allows for an optimal balance between flexibility and support. Thicker layers provide more cushioning and support, while thinner layers ensure better flexibility and breathability. The specific thickness of approximately 0.3 mm offers a good compromise between these two factors, enhancing comfort without compromising movement. Further, this thickness ranges provide sufficient durability to withstand wear and tear while maintaining the overall integrity of the shoe upper. This thickness helps prevent premature damage or fraying, extending the lifespan of the footwear.

In a preferred embodiment of the shoe upper as described herein, the intermediate foam layer comprises a thickness between 0.5 mm and 1.5 mm, preferably a thickness between 0.7 mm and 1.2 mm, more preferably a thickness of approximately 1.0 mm. The specified thickness ranges, with a preference for approximately 1.0 mm, ensures that the intermediate foam layer delivers optimal cushioning, support, flexibility, and durability while maintaining a lightweight design. For example, the thickness ranges offer an optimal balance between cushioning and support. It provides sufficient cushioning to absorb impacts and enhance comfort without compromising the structural integrity of the shoe. This specific thickness helps to achieve effective shock absorption while maintaining responsiveness. At this thickness, the intermediate foam layer maintains sufficient flexibility to adapt to the movement of the foot. This flexibility is crucial for athletic and casual footwear, allowing for natural foot motion while providing support. Moreover, the thickness ranges ensure that the foam layer adds minimal weight to the shoe. This is important for performance footwear, where reducing weight can improve speed and agility without sacrificing comfort or support.

In a preferred embodiment of the shoe upper as described herein, the intermediate foam layer comprises a thickness between 1.0 mm and 7.0 mm, preferably a thickness between 2.5 mm and 6.0 mm, more preferably a thickness of approximately 4.5 mm or a thickness of approximately 6.0 mm.

In a preferred embodiment of the shoe upper as described herein, the material of the intermediate foam layer is manufactured by a supercritical foaming process. A supercritical foaming process is a technique used to create foams with specific properties by utilizing supercritical fluids where a supercritical fluid is a substance at a temperature and pressure above its critical point. Thus, the supercritical foaming process allows for precise control over the foam's structure and properties, resulting in a material with improved mechanical properties, such as higher strength-to-weight ratios and better impact resistance. This contributes to the overall durability and performance of the intermediate layer. Further, supercritical foaming typically produces a more uniform cell structure compared to traditional foaming methods. This uniformity can enhance the consistency of the foam's cushioning and support properties, leading to more predictable and reliable performance in footwear. The fine and uniform cell structure of foam produced via supercritical foaming often provides superior thermal insulation properties. This can help in maintaining a comfortable temperature inside the shoe, contributing to enhanced wearer comfort across different environments. The supercritical foaming process can create foam with improved breathability, as the uniform pore structure can facilitate better air circulation. This can help in managing moisture and temperature within the shoe, keeping the foot dry and comfortable. In summary, using a material for the intermediate layer that is manufactured by a supercritical foaming process provides several advantages, including enhanced mechanical properties, uniform cell structure, lightweight characteristics, and improved breathability, all of which contribute to superior performance, comfort, and sustainability in footwear.

In a preferred embodiment of the shoe upper as described herein, the shoe upper further comprises a foil layer on the second layer adapted to provide a coating for the shoe upper. Adding a foil layer to the second layer of a shoe upper provides a range of benefits, including improved durability, water resistance, aesthetic appeal, and ease of maintenance, while also enhancing the overall functionality and performance of the shoe. The foil layer acts as a protective coating, increasing the overall durability of the shoe upper. It shields the underlying textile from wear, tear, and environmental factors such as moisture, UV rays, and abrasion. Moreover, a foil layer can provide effective water resistance, preventing water from penetrating through the shoe upper. This keeps the wearer's feet dry and comfortable, especially in wet conditions. Moreover, foil coatings can enhance the visual appeal of the shoe upper by adding a sleek, polished finish or a unique texture. This can elevate the design and give the shoe a more premium or fashionable look. Further, the foil layer can make the shoe upper easier to clean and maintain. Its smooth surface repels dirt and stains, allowing for easier wiping or washing compared to untreated textile surfaces. Further, depending on the type of foil used, it can be engineered to maintain or enhance the breathability of the shoe upper. Advanced foil materials can offer a balance between protection and ventilation, ensuring comfort. Moreover, modern foil materials are designed to be flexible, ensuring that the shoe upper retains its pliability and does not compromise the comfort or fit of the shoe.

In a preferred embodiment of the shoe upper as described herein, the foil layer comprises a thermoplastic polyurethane, TPU, material. TPU is known for its high durability and resistance to abrasion. The foil layer provides enhanced protection against wear and tear, extending the lifespan of the product. TPU also maintains flexibility even at low temperatures, which contributes to overall comfort. The foil layer can bend and stretch with the movement of the shoe, providing a comfortable fit without compromising on durability. TPU has excellent resistance to chemicals, oils, and fats. This makes the foil layer more resilient in environments where the shoe might be exposed to such substances, ensuring longevity and maintaining the appearance of the shoe. TPU is also inherently water-resistant, which helps in preventing water ingress and keeping the shoe's internal materials dry. This is particularly advantageous for footwear used in wet conditions. TPU has a high degree of elasticity and resilience, which contributes to improved shock absorption and impact resistance. This enhances the performance characteristics of the shoe, particularly in high-impact or athletic use. Moreover, TPU remains stable across a wide range of temperatures, maintaining its properties and performance in various environmental conditions. This ensures that the shoe performs consistently in both hot and cold conditions.

In a preferred embodiment of the shoe upper as described herein, the foil layer comprises a thickness between 0.01 mm and 0.1 mm, preferably a thickness between 0.02 mm and 0.07 mm, more preferably a thickness of approximately 0.05 mm. A foil thickness in this range ensures that the material is flexible enough to conform to different shapes and surfaces without being too rigid or cumbersome. This is particularly advantageous in applications where the foil needs to adapt to complex geometries or movements. The specified thickness range provides a balance between durability and weight. Foils that are too thin might be prone to tearing or punctures, while those that are too thick could be unnecessarily heavy or stiff. The chosen thickness range ensures the foil has adequate strength while remaining practical for its intended use. Further, at the thickness specified, the foil can effectively serve as a barrier against various environmental factors such as moisture, gases, or chemicals, depending on the material. This level of thickness is typically sufficient to provide effective protection while maintaining lightness. The chosen thickness also ensures effective thermal or electrical insulation if required, without compromising on the overall design and functionality of the product.

In a preferred embodiment of the shoe upper as described herein, the foil layer is extruded. Extrusion allows for the creation of a foil layer with a uniform thickness and consistent material properties throughout the entire layer. This ensures that the foil layer performs consistently, avoiding weak spots or variations in thickness that could affect the product's overall quality and functionality. The extrusion process can produce a smooth and high-quality surface finish on the foil layer. This can be advantageous for applications where appearance and surface texture are important, such as in consumer products or high-visibility components. Extruded foil layers can be produced in various shapes and sizes, including complex geometries. This flexibility allows for the design of components that fit precisely within the desired application or product, providing more design options.

In a preferred embodiment of the shoe upper as described herein, the foil layer comprises a hardness between 40 and 90 Shore A, preferably between 50 and 70 Shore A, more preferably approximately 65 Shore A. A foil layer with this hardness range provides a desirable combination of flexibility, durability, impact resistance, and aesthetic quality, making it suitable for a wide range of applications while ensuring consistent and reliable performance. For example, foil materials within the hardness range offer good wear resistance without being too rigid. This level of hardness ensures that the foil can withstand abrasion and physical stress over time, contributing to the longevity of the product.

In a preferred embodiment of the shoe upper as described herein, the shoe upper further comprises a resin layer as outermost layer having a polyurethane material. A resin layer made of polyurethane as the outermost layer provides a combination of durability, flexibility, water resistance, and ease of maintenance, making it an excellent choice for enhancing the performance and longevity of a product. For example, PU is known for its high durability and resistance to wear and tear. As the outermost layer, PU resin provides a robust protective barrier that can withstand daily use and harsh environmental conditions, extending the lifespan of the product. Further, PU resin offers excellent abrasion resistance, which is crucial for applications where the surface is exposed to friction and rough surfaces. This helps prevent the outer layer from deteriorating or showing signs of wear, maintaining the aesthetic and functional integrity of the product. Moreover, PU resins can be formulated to provide a flexible yet supportive layer. This flexibility helps the product conform to the shape of the foot or other parts, enhancing comfort and reducing the likelihood of discomfort or pressure points. Moreover, with PU resin as outermost layer, a variety of different colors and various further visual effects can be achieved. E.g., a surface texture can be provided, e.g., by debossing the PU resin layer. Further preferably, the resin layer may be applied in a liquid state by rolling the polyurethane material onto the adjacent layer of the layered structure.

In a preferred embodiment of the shoe upper as described herein, the first layer and/or second layer is a resin layer made of polyurethane. Due to its durability, flexibility and abrasion resistance, a resin layer made of PU as the first and/or second layer provides sufficient protection as well as comfort.

In a preferred embodiment of the shoe upper as described herein, the resin layer comprises a thickness between 0.01 mm and 0.1 mm, preferably a thickness between 0.02 mm and 0.07 mm, more preferably a thickness of approximately 0.05 mm. A resin layer with a carefully controlled thickness provides numerous technical advantages, including precise control, enhanced bonding, minimal weight addition, improved flexibility, cost efficiency, optimized cure time, and consistent performance. For example, a resin layer with a controlled thickness, such as the mentioned thickness ranges, allows for precise application and ensures uniform coverage. This level of control helps in achieving consistent performance across the entire surface, which is crucial for applications where even distribution of material properties is essential. Further, a resin layer of this thickness can provide optimal bonding between different layers or components. It ensures strong adhesion without adding excessive bulk, which improves the overall structural integrity and durability of the final product. By optimizing the thickness of the resin layer, material usage is minimized, leading to cost savings in resin procurement and processing. This also contributes to more efficient production processes. Moreover, thinner resin layers often cure faster compared to thicker layers, reducing the overall processing time and improving production efficiency. This can be advantageous in manufacturing environments where time is a critical factor.

In a preferred embodiment of the shoe upper as described herein, one or more of the layers are joined by adhesive films, preferably polyamide, PA, hotmelt adhesive films. Employing polyamide hotmelt adhesive films for joining layers offers a combination of strong, durable bonds, lightweight construction, and efficient manufacturing, while also maintaining aesthetic quality and providing resistance to environmental factors. For example, PA hotmelt adhesive films provide a strong and durable bond between layers. This ensures that the layers remain securely attached throughout the product's lifecycle, even under stress or strain. Further, the use of polyamide adhesives contributes to the overall durability of the product. Polyamide is known for its high mechanical strength and resistance to wear, which helps maintain the integrity of the layered structure. Further, hotmelt adhesives, including polyamide-based ones, are flexible and can conform to the shapes of the layers they join. This flexibility is beneficial in applications where the bonded layers need to move or flex without compromising the bond.

In a preferred embodiment of the shoe upper as described herein, the layered structure is arranged in a midfoot region and/or a tongue region of the shoe upper. Placing the layered structure with polyamide foam in the midfoot and/or tongue regions of the shoe upper provides a range of benefits, including enhanced support, improved comfort, pressure point relief, and increased durability. This strategic placement addresses key areas of the foot that experience significant stress and wear, contributing to a better overall footwear experience. For example, the layered structure in the midfoot region provides additional support and stability to the arch and midfoot area. This helps in evenly distributing the pressure exerted during movement and reduces the risk of foot fatigue and injuries. Further, by incorporating the foam layer in these regions, the shoe offers enhanced cushioning where it is needed most. The midfoot area experiences significant stress during activities, and the cushioning helps absorb impacts, providing a more comfortable experience. In the tongue region, the layered structure can improve the fit of the shoe by offering additional padding. This helps in reducing pressure points and discomfort caused by the laces or the shoe's internal structure, enhancing overall comfort. The foam layer can act as a buffer, minimizing pressure points that are common in the midfoot and tongue areas. This is especially beneficial in preventing blisters and other foot ailments that arise from friction or pressure. For sports and athletic footwear, improved support and cushioning in the midfoot region contribute to better performance by enhancing foot control and reducing the impact of high-intensity activities.

In a preferred embodiment of the shoe upper as described herein, the layered structure further comprises a profile element, preferably by debossing. The inclusion of a profile element like a debossed profile element in a layered structure provides several advantages, including improved grip, increased structural integrity, functional design benefits, and durability. These benefits contribute to both the performance and appeal of the product. For example, debossing allows for intricate and precise patterns or logos to be permanently embedded into the material. This not only adds a unique and visually appealing design element to the product but also enhances its overall appearance and branding opportunities. Further, a debossed profile element can provide additional grip and traction. The raised or recessed patterns created by debossing can increase surface contact and friction with the ground, improving stability and reducing the risk of slipping. Moreover, the debossed profile can contribute to the structural strength and stability of the layered material. By creating raised or recessed areas, the profile element can help distribute stress and forces more evenly, reducing the likelihood of material deformation or failure under pressure. The debossing process often involves compressing the material, which can increase its density and resistance to wear. This added durability helps maintain the integrity of the design elements over time, even with regular use. Debossed elements can also serve as functional embellishments, such as indicators or guides for the user. For instance, in a shoe, debossed patterns could guide the placement of the foot or indicate pressure points for optimal comfort.

In some embodiments, there may be several types of profile elements, preferably arranged on the outermost layer. For example, there may be rubber protrusions and/or printed protrusions. There may also be several profile elements of the different type to achieve the above-mentioned advantages.

Moreover, the profile elements may be arranged on the outermost layer, preferably adhered to the outermost layer, such as rubber protrusions. Another example would be printed protrusions.

In a preferred embodiment of the shoe upper as described herein, the shoe upper further comprises multiple apertures in the intermediate foam layer. Multiple apertures in an intermediate foam layer offer multiple benefits, including enhanced breathability, reduced weight, improved flexibility, optimized cushioning, better thermal regulation, and effective moisture management, all of which contribute to a more comfortable, efficient, and sustainable product. For example, apertures in the foam layer facilitate airflow, improving ventilation within the shoe. This helps in reducing moisture buildup and heat accumulation, keeping the foot cooler and drier, which is particularly beneficial for athletic and everyday footwear. Further, the inclusion of apertures can reduce the overall weight of the foam layer by removing excess material. This lightweight design can improve comfort and performance, particularly in high-performance athletic footwear where minimizing weight is crucial. Moreover, the apertures can enhance the flexibility of the foam layer by allowing it to bend and conform more easily to the shape of the foot. This results in a more comfortable and adaptive fit, reducing pressure points and improving overall wearability. Further, by strategically placing apertures, the foam layer can offer targeted cushioning and support. The design can be optimized to provide better shock absorption and impact protection in specific areas of the foot, improving overall comfort and performance. By using apertures to reduce the volume of foam required, manufacturers can achieve cost savings and reduce material consumption. This can contribute to more sustainable production practices and lower production costs.

*"Multiple"* may refer to a number that can be more than one and often implies a larger or indefinite number to achieve the mentioned technical effects.

In a preferred embodiment of the shoe upper as described herein, the multiple apertures are also comprised in the first layer and/or the second layer. Incorporating multiple apertures into the layers of a shoe upper provides multiple advantages, including improved breathability, moisture management, weight reduction, flexibility, and overall comfort, while also allowing for innovative design possibilities. For example, incorporating apertures into the layers improves airflow and ventilation within the shoe. This helps in maintaining a comfortable internal temperature by allowing heat and moisture to escape, reducing the likelihood of overheating and excessive sweating. Moreover, the apertures facilitate better moisture evaporation from the foot. This contributes to enhanced hygiene and comfort by helping to keep the foot dry and reducing the risk of bacterial growth and odor. Integrating apertures directly into the layers can lead to a reduction in the overall weight of the shoe. Fewer or smaller material sections are required to achieve the same structural support, which can enhance the shoe's performance, especially in athletic applications. Strategically placed apertures can reduce the amount of textile material needed, leading to potential cost savings in material usage without compromising the structural integrity of the shoe upper.

In a preferred embodiment of the shoe upper as described herein, the first layer, the second layer and the intermediate layer form a single piece structure extending from a top surface of the shoe upper to a bottom surface of the shoe upper. The single piece structure may completely encircle a foot of a wearer when in use. The single piece structure may be arranged in a forefoot region of the shoe upper. All of these embodiments allow the PA foam material to provide also a cushioning effect beneath the foot and in particular between the foot and the more rigid sole and/or sole plate, but without adding too much compressibility and material, which may be disadvantageous for stability during soccer like soccer ball control. Further, the single-piece structure can encircle the foot completely and thus offering a sock-like fit. This design minimizes pressure points and creates a snug, secure fit, enhancing overall comfort for the wearer. By fully encompassing the foot, the structure provides uniform pressure distribution, reducing hotspots or irritation. Locating the single-piece structure in the forefoot region ensures flexibility and responsiveness where it is most needed. This can improve athletic performance by providing better energy transfer and natural movement.

In a further aspect of the present disclosure, the objects are at least partially solved by a shoe upper, in particular for a sports shoe, comprising a polyamide, PA, foam layer extending from a top surface of the shoe upper to a bottom surface of the shoe upper to encircle a foot of the wearer. In other words, the PA foam layer extends along the sides and top of the foot of a wearer.

In a preferred embodiment of the shoe upper as described herein, the PA foam layer comprises a thickness between 1.0 mm and 7 mm, preferably a thickness between 2.5 mm and 6.0 mm, more preferably a thickness of approximately 4.5 mm or a thickness of approximately 6.0 mm.

In a preferred embodiment of the shoe upper as described herein, the PA foam layer comprises a first part in the forefoot area and a second part in the heel area of the shoe upper. The second part may be thicker than the first part.

In a preferred embodiment of the shoe upper as described herein, the first part may comprise a thickness between 1.0 mm and 5.0 mm, preferably a thickness of approximately 4.5 mm. The second part may comprise a thickness between 1.0 mm and 7 mm, preferably a thickness of approximately 6.0 mm.

The thinner first part in the forefoot provides improved flexibility, breathability, weight reduction, and ground feel, making it ideal for both performance and comfort. For example, the forefoot is the most active part of the foot during walking, running, and other movements so that a thinner upper layer allows for greater flexibility, enabling the shoe to move and bend naturally with the foot, improving overall performance. Further, thinner materials contribute to a lighter shoe, which is particularly important in sports and athletic footwear, where reducing weight improves speed and endurance.

The advantage of the thicker second part is a larger cushioning effect for the side walls of the heel area and the bottom of the heel so that a larger dampening effect in the heel area is achieved during running and the corresponding rear-foot and ankle portion of the foot is comfortably enclosed by the shoe upper.

In a preferred embodiment of the shoe upper as described herein, the first part and the second part are connected by thermally or adhesively bonding. In this way, an unpleasant stitched seam on the inside of the shoe upper in the heel area may be avoided. Alternatively, the first part and the second part may be connected by stitching, preferably zig-zag stitching.

In a preferred embodiment of the shoe upper as described herein, the first part comprises at least two portions being bonded or connected as mentioned before.

In a preferred embodiment of the shoe upper as described herein, the PA foam layer is one part being debossed, e.g., heat-pressed, to provide lower thickness as mentioned before for the first part. This reduces the manufacturing efforts for bonding/connecting two (or more parts) of the shoe upper with the PA foam layer.

In this way, a single (or continuous) piece structure may be provided for this aspect, as explained before for the previous aspect.

The shoe upper of this aspect may also be combined with one or more of the previous features of the shoe upper comprising a layered structure having a first layer, a second layer, and an intermediate foam layer between the first layer and the second layer, wherein the intermediate foam layer comprises a polyamide, PA, foam material. Here, the intermediate foam layer is similar to the described PA foam layer.

In a further aspect of the present disclosure, the objects are at least partially solved by a shoe upper, in particular for a sports shoe, comprising a polyamide, PA, foam layer. The shoe upper may be combined with a first layer and/or a second layer as defined in one or more of the previous embodiments. It is also conceivable that the shoe upper may only comprise the PA foam layer and no further layers. The shoe upper of this aspect may also be combined with one or more of the previous features of the shoe upper comprising a layered structure having a first layer, a second layer, and an intermediate foam layer between the first layer and the second layer, wherein the intermediate foam layer comprises a polyamide, PA, foam material.

The PA foam layer provides the advantages as described for the previous embodiments. In particular, the PA foam layer provides sufficient structural support to the shoe upper while providing excellent cushion properties, contributing to the comfort of the wearer by absorbing shocks and impacts during movement. Further, the stretchable nature of the foam allows for better adaptability and flexibility during dynamic movements, as well as for better adaptability of the upper to the wearer's foot shape, resulting in a snug fit and a comfortable wearing experience for the wearer.

In a preferred embodiment of the shoe upper as described herein, the PA foam layer is arranged in a forefoot region and/or a midfoot region of the shoe upper. The forefoot region and midfoot region experience significant pressure and movement. The cushioning of a PA foam layer provides additional comfort by distributing pressure more evenly across the foot. Also, the forefoot region and midfoot region need to accommodate various foot shapes and sizes. A PA foam layer allows the material to better conform to the contours of the foot, offering a snug and secure fit that adapts to individual foot shapes.

In a preferred embodiment of the shoe upper as described herein, the material of the PA foam layer is manufactured by a supercritical foaming process, as mentioned before. The supercritical foaming process allows for precise control over the foam's structure and properties, resulting in a material with improved mechanical properties, such as higher strength-to-weight ratios and better impact resistance. This contributes to the overall durability and performance of the PA foam layer. Further, supercritical foaming typically produces a more uniform cell structure compared to traditional foaming methods. This uniformity can enhance the consistency of the foam's cushioning and support properties, leading to more predictable and reliable performance in footwear. The fine and uniform cell structure of foam produced via supercritical foaming often provides superior thermal insulation properties. This can help in maintaining a comfortable temperature inside the shoe, contributing to enhanced wearer comfort across different environments. The supercritical foaming process can create foam with improved breathability, as the uniform pore structure can facilitate better air circulation. This can help in managing moisture and temperature within the shoe, keeping the foot dry and comfortable. In summary, using a material for the PA foam layer that is manufactured by a supercritical foaming process provides several advantages, including enhanced mechanical properties, uniform cell structure, lightweight characteristics, and improved breathability, all of which contribute to superior performance, comfort, and sustainability in footwear.

In a preferred embodiment, the PA foam layer comprises polyamide 11, PA 11, polyamide 12, PA12, and/or polyether block amide, PEBA.

In a further aspect of the present disclosure, the objects are at least partially solved by a sports shoe comprising a shoe upper as described in any one of the embodiments in here.

Since the sports shoe of this aspect comprises the shoe upper as described elsewhere, it is understood that the technical properties shown or described for the shoe upper, the advantages and the improvements over the state of the art are likewise applicable to the sports shoe with and vice versa.

In a preferred embodiment of the shoe as described herein, the sports shoe is a soccer shoe. The upper part of a soccer shoe is crafted to offer improved ball control. Features such as textured surfaces or grip-enhancing materials help players better control and manipulate the ball, facilitating more precise passing, dribbling, and shooting.

In a preferred embodiment of the shoe as described herein, the soccer shoe is laceless. By eliminating laces, the shoe can provide a cleaner and more consistent striking surface for the ball. This can improve accuracy and control when kicking, passing, or shooting, as there are no laces to interfere with ball contact. Without laces, there is a lower risk of injury from lace-related issues, such as laces coming undone and causing tripping, or laces putting pressure on the foot. Additionally, the laceless design minimizes the risk of lace-related abrasions or discomfort. Overall, laceless soccer shoes offer a combination of functional and performance benefits, making them an attractive option for players seeking a blend of comfort, style, and enhanced on-field performance.

In a preferred embodiment of the sports shoe as described herein, the intermediate foam layer is arranged only in a throat region of the shoe upper. By placing the foam layer only in the throat region, which is the area around the opening of the shoe where the foot enters, the cushioning is concentrated where it is most needed. This can enhance comfort during the initial foot entry and while securing the shoe, providing a plush and supportive feel. The throat region often experiences the most stress from foot movement and adjustments. The foam layer can help in accommodating varying foot shapes and providing a snug fit, which reduces pressure points and enhances overall comfort. Moreover, limiting the foam layer to the throat region helps in keeping the overall weight of the shoe lower compared to having foam throughout the entire upper. This can improve performance, especially in athletic or running shoes, where weight reduction is crucial.

### 4. Brief description of the figures

In the following, the invention will be described in more detail with reference to the following figures:
- **Fig. 1:**: shows a layered structure for a shoe upper, in particular for a sports shoe, according to an embodiment of the present disclosure.
- **Fig. 2:**: shows a lateral side view of a soccer shoe with a shoe upper being laceless according to an embodiment of the present disclosure.
- **Fig. 3:**: shows a lateral side view of a soccer shoe with a shoe upper being laceless according to another embodiment of the present disclosure.
- **Fig. 4:**: shows a top view of a shoe upper according to another embodiment of the present disclosure.

### 5. Detailed description of the preferred embodiments

In the following only some possible embodiments of the invention are described in detail. However, the present invention is not limited to these, and a multitude of other embodiments are applicable without departing from the scope of the invention. The presented embodiments can be modified in several ways and combined with each other whenever compatible and certain features may be omitted in so far as they appear dispensable. In particular, the disclosed embodiments may be modified by combining certain features of one embodiment with one or more features of another embodiment.

It is to be understood that not all features of the described aspects/embodiments must be present for realizing the technical advantages provided by the present disclosure, which is defined by the subject matter of the claims. The disclosed aspects/embodiments may be modified by combining certain features of one aspect/embodiment with one or more features of another aspect/embodiment. Specifically, the skilled person will understand that features, and/or functional elements of one aspect/embodiment can be combined with technically compatible features, and/or functional elements of any other aspect/embodiment of the present disclosure given that the resulting combination falls within the definition of the present disclosure.

While the embodiments below are described primarily with reference to a shoe upper for a sports shoe such as a soccer shoe, the skilled person will recognize that the disclosure according to the invention can equally be applied in a plurality of different technical fields and/or use cases. For instance, other sports shoe for basketball, football, tennis, golf, cross-training, hiking, cycling, trailrunning or snowboarding are also conceivable. The expression *"sports shoe such as a soccer shoe"* means that athletic sports shoes are mentioned without use cases not directed to the athletic use like business shoes or chess shoes or house slippers.

Throughout the present figures and specification, the same reference numerals refer to the same elements. For the sake of clarity and conciseness, certain features, parts, elements, aspects, components and/or steps of certain embodiments are presented without undue detail where such detail would be apparent to the skilled person in the art considering the teachings herein and/or where such detail would obfuscate an understanding of more pertinent aspects of the embodiments.

As understood by the skilled person and/or to avoid redundancies, reference is also made to the explanations in the preceding sections, which also apply to the following detailed description. Further, not all features, parts, elements, aspects, components and/or steps are expressly indicated by reference signs for the sake of brevity and clarity. This particularly applies, where the skilled person recognizes that such features, parts, elements, aspects, components and/or steps are present in a plurality.

### Definitions

The term "*forefoot region*" of a shoe upper as used herein may refer to the front part of the shoe upper, e.g., the forefoot part of the shoe upper, encompassing the area from the ball of the foot to the toes. It is the part of the shoe upper that encounters the foot during propulsion and toe-off phases of the gait cycle.

The term "*toe region*" of a shoe upper as used herein may refer to the front part of the shoe upper that covers and protects the toes of the wearer. This area is usually designed to provide space and comfort for the toes, while also offering protection from external elements.

The term "*midfoot region*" of a shoe upper as used herein may refer to the central portion of the shoe upper that encompasses the area between the ball of the foot (forefoot) and the heel. It is located approximately in the middle of the foot's longitudinal axis.

The term "*vamp region*" of a shoe upper as used herein may refer to the portion of the shoe upper which covers the top of the foot and includes the area over the toes.

The term "*supercritical foaming process*" as used herein may refer to a technique used to create foams with specific properties by utilizing supercritical fluids where a supercritical fluid is a substance at a temperature and pressure above its critical point.

The term "*lateral*" of a shoe or shoe upper as used herein may refer to an outer side of the shoe or shoe upper. This outer side may be farther way from a centerline of the body of the wearer, when the shoe with the shoe upper is worn, compared to a medial side being an inner side of the shoe. This outer side may extend from a toe region to a heel region.

Unless otherwise stated, the term "*approximately*" as used in the present context may be understood to a great or significant extent or for the most part or essentially. In particular, manufacturing tolerances are included by this term. Hence, any values or arrangements described by using the term "*approximately*" may slightly deviate from the described values or arrangements.

The term "*and*/*or*" is only an association relationship describing associated objects and represents that three relationships may exist. For example, A and / or B may represent three conditions: i.e., independent existence of A, existence of both A and B and independent existence of B. In addition, the character "/" in the disclosure usually represents that previous and next associated objects form an "*or*" relationship.

The terms "*upper*", "*above*", "*below*", "*under*" and the like as used in the present invention to indicate a relative position in space are used for the purpose of facilitating explanation to describe a sole, a shoe, an element, a part, an object and/or a feature shown in the drawings relative to the relationship of another shoe, element, part, object and/or feature.

### Description of figures

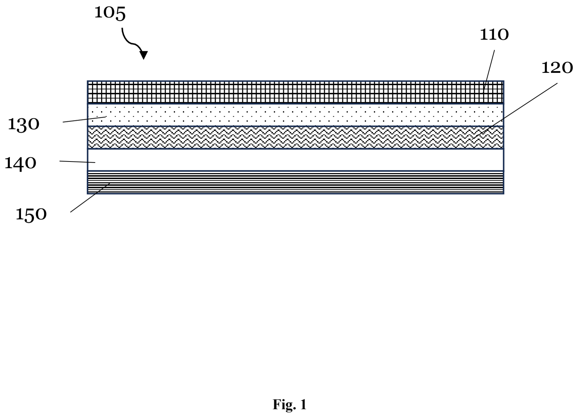

**Fig. 1** shows a layered structure 105 for a shoe upper (not shown), in particular for a sports shoe, according to an embodiment of the present disclosure.

The layered structure 105 will be explained from the inside to the outside of a shoe upper. The layered structure 105 has (or comprises) a first layer 110 being a first textile layer 110, but other materials like a coating, a film, a synthetic leather or a leather are also conceivable. This first textile layer 110 may be adapted to be turned inward of the shoe upper. The first textile layer 110 may form an innermost surface of the shoe upper, i.e., this surface refers to the interior side of the shoe upper, which directly contacts the foot when the shoe is worn.

The layered structure 105 has also a second layer 120 being a second textile layer 120, but other materials like a coating, a film, a synthetic leather or a leather are also conceivable. In some embodiments, the second textile layer 120 may be adapted to be turned outward of the shoe upper. The second textile layer 120 may form an outermost surface of the shoe upper, i.e., this surface refers to the very outer layer or the external surface of the shoe upper part so that now further layer is then arranged on top of it.

The first textile layer 110 and the second textile layer 120 may comprise a polyamide, PA, material. As explained before, using PA in the layers like textile layers enhances the overall durability of the shoe upper, making it more resistant to wear and tear, which extends the life of the footwear. Other (specific) materials could be a polyamide, PA, material, a polyurethane, PU, material and/or a thermoplastic polyurethane, TPU, material.

The first textile layer 110 and the second textile layer 120 may comprise a thickness between 0.05 mm and 1.0 mm, preferably a thickness between 0.1 mm and 0.8 mm, more preferably a thickness between 0.2 mm and 0.6 mm, most preferably a thickness of approximately 0.3 mm. These values contribute to effective breathability, which helps in moisture management and temperature regulation, and provide an optimal balance between flexibility and support. Both the first textile layer 110 and the second textile layer 120 may comprise a thickness of approximately 0.3 mm.

The first textile layer 110 and the second textile layer 120 may also comprise a fabric, preferably a knitted fabric. As explained above, the first textile layer 110 and/or the second textile layer 120 may also comprise a woven and/or a non-woven textile. Other (specific) materials could be those as mentioned above.

The layered structure 105 has also an intermediate foam layer 130 between the first textile layer 110 and the second textile layer 120, wherein the intermediate foam layer 130 comprises a PA foam material. As explained above, high tensile strength and abrasion resistance as well as additional structural support is provided to the shoe upper. For example, polyamide 11, PA 11, may be used as a raw material for the foaming process of the PA foam material. In another example, PA 12 could be used. In another example, polyether block amide, PEBA, could be used. Another (specific) material could be TPEE (thermoplastic polyester elastomer) foam.

Alternatively or additionally, the intermediate foam layer may comprise a thermoplastic polyurethane, TPU, foam instead or together with the PA foam.

The intermediate foam layer 130 may comprise a thickness between 0.5 mm and 1.5 mm, preferably a thickness between 0.7 mm and 1.2 mm, more preferably a thickness of approximately 1.0 mm.

The material of the intermediate foam layer 130 may manufactured by a supercritical foaming process, wherein foams are created with specific properties by utilizing supercritical fluids. Thus, the overall durability and performance of the intermediate layer is improved. For example, polyamide 11, PA 11, may be used as raw material. PA 11 is a type of nylon, and Rilsan^{®} is the trademarked name used by Arkema. In another example, PA 12 could be used. In another example, polyether block amide, PEBA, could be used.

Moreover, the three layers, namely the first textile layer 110, the second textile layer 120 and the intermediate foam layer 130, may be laminated together on a sheet roll.

The layered structure 105 further comprises a foil layer 140 on the second textile layer 120. The foil layer 140 may be adapted to provide a coating for the shoe upper, in particular when it is applied as outermost layer. A "*coating*" may refer to a thin layer of material that is applied to the surface of the shoe upper to enhance its properties or to give it specific characteristics like waterproofing, durability, breathability, protection from degradation due to exposure to sunlight (UV radiation), or repellency dirt and stains.

The foil layer 140 comprises a thermoplastic polyurethane, TPU, material, which has high durability and resistance to abrasion. The advantage of the TPU foil layer 140 is that different kinds of coating can easily be applied thereon, such as, e.g., printed layers, or protrusions of any kind. Furthermore, the TPU foil layer 140 as outermost layer may be beneficial for bonding the shoe upper to the sole, which is usually a relatively stiff sole for soccer shoes. Another (specific) material for foil layer 140 could be PA (polyamide).

The foil layer 140 comprises a thickness between 0.01 mm and 0.1 mm, preferably a thickness between 0.02 mm and 0.07 mm, more preferably a thickness of approximately 0.05 mm.

The foil layer 140 may be extruded. Other (specific) manufacturing processes like coating processes are also conceivable.

The foil layer 140 comprises a hardness between 40 and 90 Shore A, preferably between 50 and 70 Shore A, more preferably approximately 65 Shore A.

The layered structure 105 further comprises a resin layer as outermost layer having a polyurethane, PU, material. As mentioned, PU resin offers excellent abrasion resistance.

The resin layer may comprise a thickness between 0.01 mm and 0.1 mm, preferably a thickness between 0.02 mm and 0.07 mm, more preferably a thickness of approximately 0.05 mm.

The five layers 110, 120, 130, 140, and 150 are joined respectively by adhesive films like PA hotmelt adhesive films. Other (specific) materials could be TPU hotmelt adhesive films or PU hotmelt adhesive films.

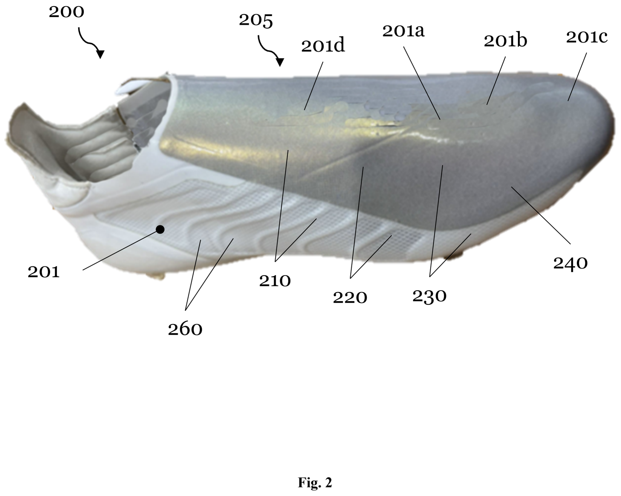

**Fig. 2** shows a lateral side view of a soccer shoe 200 with a shoe upper 201 being laceless according to an embodiment of the present disclosure.

The shoe upper 201 comprises a layered structure 205 with a first layer 210, a second layer 220, and an intermediate foam layer 230 between the first layer 210 and the second layer 220, wherein the intermediate foam layer 230 comprises a PA foam material. These layers may be similar to the first layer 110, the second layer 120, and the intermediate foam layer 130 with respect to Fig. 1.

The first layer 210 is a first textile layer 210, but other materials like a coating, a film, a synthetic leather or a leather are also conceivable.

The second layer 220 is s second textile layer 220, but other materials like a coating, a film, a synthetic leather or a leather are also conceivable.

The layered structure 205 also comprises a foil layer 240 similar to the foil layer 140 with respect to Fig. 1.

The layered structure 205 may also comprise a resin layer similar to the resin layer 150 with respect to Fig. 1.

The layered structure 205 is arranged in a vamp region 201a, a forefoot region 201b and a toe region 201c of the shoe upper 201 and covered by the foil layer 140. Alternatively, the foil layer 140 may also be omitted in these regions. As explained above, the layered structure 205 in these specific regions of the shoe upper 201 provides additional cushioning and protection against impacts, reducing the risk of injuries from stubbing or external forces.

As the shoe upper 201 is laceless, the layered structure 205 with the foil layer 140 is also arranged in a throat 201d region of the shoe upper 201. For shoe upper with laces, the layered structure 205 the foil layer 140 would be further be arranged in a tongue region of the shoe upper 201. As mentioned before, the foil layer 140 may also be omitted in these regions for a shoe upper with laces.

There are multiple apertures 260 in the intermediate foam layer 230 on the lateral side of the midfoot region of the shoe upper 201. They may provide enhanced breathability, reduced weight, improved flexibility, optimized cushioning, better thermal regulation, and effective moisture management. "*Multiple*" may refer to a number that can be more than one and often implies a larger or indefinite number to achieve the mentioned technical effects.

Further apertures 260 are comprised in the first textile layer 210 and/or the second textile layer 220. However, the apertures 260 may also only be comprised in the intermediate foam layer 230.

Alternatively or additionally, the apertures 260 may also be arranged on the medial side of the shoe upper 201.

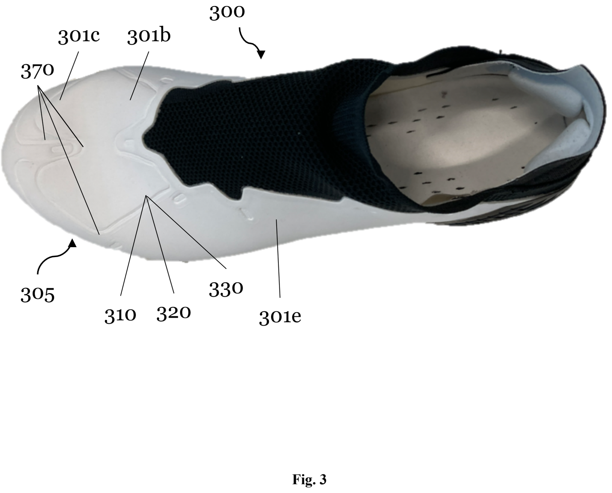

**Fig. 3** shows a lateral side view of a sports shoe 300 with a shoe upper 301 being laceless according to an embodiment of the present disclosure.

The shoe upper 301 comprises a layered structure 305 with a first layer 310, a second layer 320, and an intermediate foam layer 330 between the first layer 310 and the second layer 320, wherein the intermediate foam layer 330 comprises a PA foam material. These layers may be similar to the first layer 110, the second layer 120, and the intermediate foam layer 130 with respect to Fig. 1 as well as to the first layer 210, the second layer 220, and the intermediate foam layer 230 with respect to Fig. 2.

The first layer 310 is a first textile layer 310, but other materials like a coating, a film, a synthetic leather or a leather are also conceivable.

The second layer 320 is s second textile layer 320, but other materials like a coating, a film, a synthetic leather or a leather are also conceivable.

The layered structure 305 may also comprises a foil layer similar to the foil layer 240 with respect to Fig. 2. The layered structure 305 may also comprise a resin layer similar to the resin layer 150 with respect to Fig. 1.

The layered structure 305 is arranged in a forefoot region 301b, a toe region 301c and a midfoot region 301e of the shoe upper 201.

The layered structure 205 further comprises one or more profile elements 370 by debossing to provide a certain pattern in the toe region 301c and the forefoot region 301b. As mentioned before, there may be several types of profile elements 370 like rubber protrusions and/or printed protrusions.

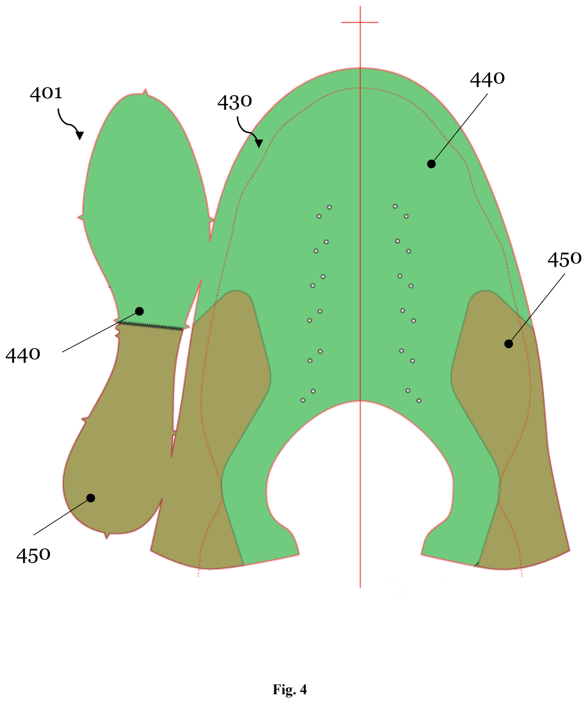

**Fig. 4** shows a top view of a shoe upper 401 according to another embodiment of the present disclosure.

The shoe upper 401 is in a two-dimensional form before it is lasted to get its three-dimensional form.

The shoe upper 401 comprises a polyamide, PA, foam layer 430 extending from a top surface of the shoe upper 401 to a bottom surface of the shoe upper 401 to encircle a foot of the wearer. As mentioned, the PA foam layer extends along the sides and top of the foot of a wearer when it has its three-dimensional form.

The PA foam layer 430 comprises a thickness between 1.0 mm and 7.0 mm, preferably a thickness between 2.5 mm and 6.0 mm, more preferably a thickness of approximately 4.5 mm or a thickness of approximately 6.0 mm.

The PA foam layer 430 comprises a first part 440 in the forefoot area and a second part 450 in the heel area of the shoe upper 400.

The first part 440 comprises a thickness between 1.0 mm and 5.0 mm, namely of approximately 4.5 mm.

The second part 450 comprises a thickness between 1.0 mm and 7 mm, namely a thickness of approximately 6.0 mm.

As mentioned, different thicknesses provide advantages like flexibility in the forefoot area and cushioning in the heel are of the shoe upper 401.

The first part 440 and the second part 450 are partly connected by thermally or adhesively bonding. This may apply in an "edge-to-edge no stitch" manner because an unpleasant stitched seam on the inside of the shoe upper 400 in the heel area may be avoided. In their bottom parts, the first part 440 and the second part 450 are connected by stitching, namely zig-zag stitching. Other stitching techniques are also conceivable.

In this way, a single (or continuous) piece for the shoe upper 401 may be provided from the PA foam layer 430.

The shoe upper 401 may also comprise a foil layer (not shown) similar to the foil layer 240 with respect to Fig. 2.

A method for manufacturing such a shoe upper 400 may comprise the steps of wrapping the shoe upper 401 with the PA foam layer 430 and its first part 440 and second part 450 around a shoe last (not shown) and bonding the bottom portions of the two parts directly along a rim to the superior portions of the two parts. The bonding is preferably performed by stitching.

A sole may then adhesively be bonded to the bottom portions of the two parts. Other bonding techniques for the sole to the shoe upper 401 are also conceivable.

Further embodiments which may facilitate understanding the invention are mentioned in the following:
1. A shoe upper, in particular for a sports shoe, comprising a layered structure having
   a. a first layer;
   b. a second layer; and
   c. an intermediate foam layer between the first layer and the second layer, wherein the intermediate foam layer comprises a polyamide, PA, foam material.
2. The shoe upper of embodiment 1, wherein at least one of the following applies:
   the first layer is adapted to be turned inward of the shoe upper;
   the second layer is adapted to be turned outward of the shoe upper;
   the intermediate foam layer is adapted to provide stretchability and cushioning for ball contacts.
3. The shoe upper of embodiment 1 or 2, wherein the first layer forms an innermost surface of the shoe upper.
4. The shoe upper of one of the preceding embodiments, wherein the second layer forms an outermost surface of the shoe upper.
5. The shoe upper of one of the preceding embodiments, wherein the layered structure is arranged in a vamp region of the shoe upper.
6. The shoe upper of the preceding embodiment, wherein the layered structure is arranged in a forefoot region of the shoe upper.
7. The shoe upper of embodiment 5 or 6, wherein the layered structure is arranged in a toe region of the shoe upper.
8. The shoe upper of one of the preceding embodiments, wherein the first layer is a first textile layer.
9. The shoe upper of one of embodiments 1 to 7, wherein the first layer comprises a coating, a film, a synthetic leather or a leather.
10. The shoe upper of one of the preceding embodiments, wherein the second layer is a second textile layer.
11. The shoe upper of one of embodiments 1 to 9, wherein the second layer comprises a coating, a film, a synthetic leather or a leather.
12. The shoe upper of one of the preceding embodiments, wherein one or more of the first layer and the second layer comprises a fabric, preferably a knitted fabric.
13. The shoe upper of one of the preceding embodiments, wherein one or more of the first layer and the second layer comprises a polyamide, PA, material, a polyurethane, PU, material and/or a thermoplastic polyurethane, TPU, material.
14. The shoe upper of one of the preceding embodiments, wherein one or more of the first layer and the second layer comprises a thickness between 0.05 mm and 1.0 mm, preferably a thickness between 0.1 mm and 0.8 mm, more preferably a thickness between 0.2 mm and 0.6 mm, most preferably a thickness of approximately 0.3 mm.
15. The shoe upper of one of the preceding embodiments, wherein the intermediate foam layer comprises a thickness between 0.5 mm and 1.5 mm, preferably a thickness between 0.7 mm and 1.2 mm, more preferably a thickness of approximately 1.0 mm.
16. The shoe upper of one of the preceding embodiments, wherein the material of the intermediate foam layer is manufactured by a supercritical foaming process.
17. The shoe upper of one of the preceding embodiments, further comprising a foil layer on the second layer adapted to provide a coating for the shoe upper.
18. The shoe upper of the preceding embodiment, wherein the foil layer comprises a thermoplastic polyurethane, TPU, material.
19. The shoe upper of one of the embodiments 17 or 18, wherein the foil layer comprises a thickness between 0.01 mm and 0.1 mm, preferably a thickness between 0.02 mm and 0.07 mm, more preferably a thickness of approximately 0.05 mm.
20. The shoe upper of one of the embodiments 17-19, wherein the foil layer is extruded.
21. The shoe upper of one of the embodiments 17-20, wherein the foil layer comprises a hardness between 40 and 90 Shore A, preferably between 50 and 70 Shore A, more preferably approximately 65 Shore A.
22. The shoe upper of one of the preceding embodiments, further comprising a resin layer as outermost layer having a polyurethane, PU, material.
23. The shoe upper of the preceding embodiment, wherein the resin layer comprises a thickness between 0.01 mm and 0.1 mm, preferably a thickness between 0.02 mm and 0.07 mm, more preferably a thickness of approximately 0.05 mm.
24. The shoe upper of one of the preceding embodiments, wherein one or more of the layers are joined by adhesive films, preferably polyamide, PA, hotmelt adhesive films.
25. The shoe upper of one of the preceding embodiments, wherein the layered structure is arranged in a midfoot region and/or a tongue region of the shoe upper.
26. The shoe upper of one of the preceding embodiments, wherein the layered structure further comprises a profile element, preferably by debossing.
27. The shoe upper of one of the preceding embodiments, further comprising multiple apertures in the intermediate foam layer.
28. The shoe upper of the preceding embodiment, wherein the multiple apertures are also comprised in the first layer and/or the second layer.
29. The shoe upper of one of the preceding embodiments, wherein the first layer, the second layer and the intermediate layer form a single piece structure extending from a top surface of the shoe upper to a bottom surface of the shoe upper.
30. The shoe upper of the preceding embodiment, wherein the single piece structure completely encircles a foot of a wearer when in use.
31. The shoe upper of one of the embodiments 29 or 30, wherein the single piece structure is arranged in a forefoot region of the shoe upper.
32. A sports shoe comprising a shoe upper of one of the preceding embodiments.
33. The sports shoe of the preceding embodiment, wherein the sports shoe is a soccer shoe.
34. The sports shoe of the preceding embodiment, wherein the soccer shoe is laceless.
35. The sports shoe of one of the embodiments 32-34, wherein the intermediate foam layer is arranged only in a throat region of the shoe upper.

## Claims

1. A shoe upper, in particular for a sports shoe, comprising a layered structure having
a. a first layer;
b. a second layer; and
c. an intermediate foam layer between the first layer and the second layer, wherein the intermediate foam layer comprises a polyamide, PA, foam material.

2. The shoe upper of claim 1, wherein at least one of the following applies:
the first layer is adapted to be turned inward of the shoe upper;
the second layer is adapted to be turned outward of the shoe upper;
the intermediate foam layer is adapted to provide stretchability and cushioning for ball contacts,
the first layer forms an innermost surface of the shoe upper,
the second layer forms an outermost surface of the shoe upper,
the layered structure is arranged in a vamp region of the shoe upper,
the layered structure is arranged in a forefoot region of the shoe upper,
the layered structure is arranged in a toe region of the shoe upper.

3. The shoe upper of one of the preceding claims, wherein the first layer is a first textile layer, and/or wherein the first layer comprises a coating, a film, a synthetic leather or a leather.

4. The shoe upper of one of the preceding claims, wherein the second layer is a second textile layer, and/or wherein the second layer comprises a coating, a film, a synthetic leather or a leather.

5. The shoe upper of one of the preceding claims, wherein one or more of the first layer and the second layer comprises a fabric, preferably a knitted fabric, and/or wherein one or more of the first layer and the second layer comprises a polyamide, PA, material, a polyurethane, PU, material and/or a thermoplastic polyurethane, TPU, material, and/or wherein one or more of the first layer and the second layer comprises a thickness between 0.05 mm and 1.0 mm, preferably a thickness between 0.1 mm and 0.8 mm, more preferably a thickness between 0.2 mm and 0.6 mm, most preferably a thickness of approximately 0.3 mm.

6. The shoe upper of one of the preceding claims, wherein the intermediate foam layer comprises a thickness between 0.5 mm and 1.5 mm, preferably a thickness between 0.7 mm and 1.2 mm, more preferably a thickness of approximately 1.0 mm, and/or wherein the material of the intermediate foam layer is manufactured by a supercritical foaming process.

7. The shoe upper of one of the preceding claims, further comprising a foil layer on the second layer adapted to provide a coating for the shoe upper, wherein the foil layer preferably comprises a thermoplastic polyurethane, TPU, material, wherein the foil layer preferably comprises a thickness between 0.01 mm and 0.1 mm, preferably a thickness between 0.02 mm and 0.07 mm, more preferably a thickness of approximately 0.05 mm, wherein the foil layer preferably is extruded, wherein the foil layer preferably comprises a hardness between 40 and 90 Shore A, preferably between 50 and 70 Shore A, more preferably approximately 65 Shore A.

8. The shoe upper of one of the preceding claims, further comprising a resin layer as outermost layer having a polyurethane, PU, material, wherein the resin layer preferably comprises a thickness between 0.01 mm and 0.1 mm, preferably a thickness between 0.02 mm and 0.07 mm, more preferably a thickness of approximately 0.05 mm.

9. The shoe upper of one of the preceding claims, wherein one or more of the layers are joined by adhesive films, preferably polyamide, PA, hotmelt adhesive films.

10. The shoe upper of one of the preceding claims, wherein the layered structure is arranged in a midfoot region and/or a tongue region of the shoe upper.

11. The shoe upper of one of the preceding claims, wherein the layered structure further comprises a profile element, preferably by debossing.

12. The shoe upper of one of the preceding claims, further comprising multiple apertures in the intermediate foam layer, wherein the multiple apertures preferably are also comprised in the first layer and/or the second layer.

13. The shoe upper of one of the preceding claims, wherein the first layer, the second layer and the intermediate layer form a single piece structure extending from a top surface of the shoe upper to a bottom surface of the shoe upper, wherein preferably the single piece structure completely encircles a foot of a wearer when in use, wherein preferably the single piece structure is arranged in a forefoot region of the shoe upper.

14. A sports shoe comprising a shoe upper of one of the preceding claims.

15. The sports shoe of the preceding claim, wherein the sports shoe is a soccer shoe, wherein preferably the soccer shoe is laceless, wherein preferably the intermediate foam layer is arranged only in a throat region of the shoe upper.
